# EUROPEAN PATENT APPLICATION

(11) **EP 0 727 148 A2**
(43) Date of publication of application: **21.08.1996**
(21) Application number: 96200343.0
(22) Date of filing: 14.02.1996
(51) Int. Cl.: A23G 9/00

(54) **Method of preparation of powder semifinished mixes for ice-creams and frozen desserts or mousses and products obtained thereby**

(30) Priority: 16.02.1995 IT MI950283
(71) Applicant: UVIGAL S.p.A., 24040 Filago (Bergamo) (IT)
(72) Inventor: Vismara, Francesco, 22052 Cernusco Lombardone (Como) (IT); Vieti, Edgardo, 20056 Trezzo Sull'Adda (Milano) (IT)
(74) Representative: Appoloni, Romano

(57) **Abstract**

In order to simplify and speed-up the production, and prevent balancing errors in manufacturing ice-creams, Italian soft ice-creams ("semifreddo"), mousses and desserts, the present invention provides a fatted semifinished mix in powder form containing those ingredients which are traditionally and legitimately used in ice-creams, Italian soft ice-creams, mousses and desserts.

The constant-during-time meal-like consistency of the fatted semifinished mix, even containing high fat levels, was obtained by performing combined operations of heating, blending, homogenizing, atomizing, spraying and cooling the fat ingredients on the powder fractions during some of the steps of preparation of the semifinished mix.

Said semifinished mixes, with the only addition of water, are perfectly suitable for producing ice-creams and syrups for ice-creams, Italian soft ice-creams and mousses with perfectly balanced values of reference parameters, i.e.:
(A) total solids,
(B) sugars,
(C) fats,
(D) non-fat milk solids,
(E) other solids.

## Description

The present invention relates to a method for preparing powder semifinished mixes for producing ice-creams, Italian soft ice-creams ("semifreddo"), mousses and desserts; to the semifinished mixes obtained by means of said method; and to ice-creams, Italian soft ice-creams and mousses obtainable by using said semifinished mixes.

The preparation of an ice-cream or an Italian soft ice-creams with high-level organoleptic characteristics is conditioned by a strict compliance with well-determined quantitative ratios of ingredients to each other.

An ice-cream or an Italian soft ice-cream with is producing by complying with this basic rule of ice-cream manufacturing art is referred to as being "correctly balanced" or, more simply "balanced".

Experience demonstrated that at present, due to a number of reasons, not always manufacturing an ice-cream or an Italian soft ice-cream is an easy task. The main reasons are: difficulty in correctly finding out and metering all the ingredients, and the long time required for performing the necessary operations. And the situation is even worse than that: one will easily realize that just on considering the considerably large number of flavours with which ice-creams and Italian soft ice-creams are presently demanded.

In order to obviate said drawbacks, a large number of powder semifinished mixes for ice-cream and Italian soft ice-cream production are presently available from the market which, by containing premetered amounts of some of the components of ice-cream and Italian soft ice-cream simplify, but unfortunately do not completely solve, the problem the ice-cream manufacturer or the pastry-cook have to cope with -- with they, in any case, being anyway forced to always keep in store some immediately available ingredients and correctly meter them relatively to the amount of previously prepared mix they have available, or relatively to the amount of finished product they wish to prepare.

From the above, one will realize that in order to solve the problem of obtained balanced products, it is absolutely necessary that the ice-cream manufacturer or pastry-cook is completely relieved from having to store and meter the ice-cream and Italian soft ice-cream ingredients, or he is supplied with a semifinished mix in powder form which contains all the necessary ingredients for ice-cream and Italian soft ice-cream manufacturing (except for water).

Unfortunately, obtaining such a powder semifinished mix is mainly hindered by the matter of fact that some of ice-cream and Italian soft ice-cream ingredients, i.e., fats, are difficultly mixed with the other ingredients without obtaining poor-quality products which are visibly inhomogeneous, with paste-like consistency, difficult to be fractionated.

Therefore, the purpose of the present invention is of providing a method for preparing a powder semifinished mix for ice-creams and Italian soft ice-creams which, by being in powder form and containing all the necessary ingredients (excluding water), does not display the drawback of having a paste-like consistency difficult to be fractionated and of obliging the ice-cream manufacturer and the pastry-cook to perform further ingredient additions, and therefore metering operations.

The above purpose is achieved by means of a method for preparing a powder semifinished mix for ice-creams and italian soft ice-creams ("semifreddo") according to Claim 1.

By means of the method according to the present invention, a semifinished mix in powder form can be obtained albeit it contains large amounts of fat. Blending the fats with the other ingredients with the meal-like consistency of the semifinished mix being simultaneously retained was made possible by the combination of the operations of heating, blending, homogenizing, atomizing and subsequent spraying and cooling the fat substances.

By combining all ingredients into one single product, including all the fat substances, the semifinished mix is fully formulated and is ready to be pasteurized and aged and whisked on the traditional machines for ice-cream and pastry manufacture, with only water having to be added.

Therefore, the ice-cream manufacturer and the pastry cook can prepare rapidly and with no risk of mistakes, a perfectly balanced ice-cream or Italian soft ice-cream.

For exemplifying purposes, the preparation of a semifinished mix for ice-creams and Italian soft ice-creams comprises the following steps:
-- a step of weighing the powder ingredients comprised in semifinished mix recipes and traditionally used in ice-cream and pastry art;
-- a step of mixing all ingredients in powder form by pulsed and/or continuous pumping a plurality of high-pressure air jets (i.e., under pressure values of approximately 25 and 30 bars) inside a suitable tank;
-- a step of melting the fat fraction by heating;
-- a step of adding the fat fraction to the previously mixed powders, during which the atomized fat meets with the stream of powders falling by gravity while a cold air stream impinges on them with a temperature comprised within the range of from approximately -20°C to approximately -30°C. During this step, the fat fraction solidifies and crystallizes supplying the product with permanent free-flowing characteristics, with said product therefore not taking an oily, fatty or lumpy appearance;
-- a step of recovering the so obtained semifinished mix in powder form for ice-creams, Italian soft ice-creams, mousses and desserts, which semifinished mix, surprisingly, does not take, and will never take, an oily or fatty appearance, nor will turn into a lumpy mass.
The ice-cream ingredients which can be used are all those ingredients which are customarily used, and may be used pursuant to the applicable Law and therefore according to good industrial practice (S.B.T.I.).

Soy lecithin and other oil-soluble ingredients are homogeneously mixed with butter and/or margarine and/or vegetable fat oils, which may also be hardened oils. In order to prevent impurities from entering the product, air used during the blending/fatting steps is suitably filtered.

The parameters for preparing a semifinished mix for producing balanced ice-cream are as follows:
-- the total solids level should be not lower than 28% and not higher than 42%, so total water level will be comprised within the range of from 72% to 58%:

| | Minimum level | Maximum level |
|---|---|---|
| Sugars | 16% | 22% |
| Fats | 6% | 12% |
| Non-fat milk solids (NFMS) | 8% | 12% |
| Other solids | 1% | 5% |

The ice-creams are obtained by mixing a minimum amount of 280 g and a maximum amount of 420 g of semifinished mix containing the above ingredients with 720 g and 580 g, respectively, of water and pasteurizing, ageing and whisking the resulting blend according to good ice-cream manufacturing practice.

The parameters for preparing a semifinished mix for obtaining an Italian soft ice-cream, a mousse or a dessert are as follows:
-- the total solids level should be not lower than 45% and not higher than 55%, so total water level will be comprised within the range of from 55% to 45%:

| | Minimum level | Maximum level |
|---|---|---|
| Sugars | 15% | 25% |
| Fats | 15% | 25% |
| Non-fat milk solids | 2% | 5% |
| Other solids | 2% | 6% |

The Italian soft ice-creams, mousses, desserts are obtained by blending a minimum amount of 450 g and a maximum amount of 550 g of the above semifinished mix with 450 g and 550 g, respectively, of water and pasteurizing and preparing according to good pastry manufacturing practice.

## Claims

1. Method for preparing a semifinished mix for ice-creams, Italian soft ice-creams ("semifreddo"), mousses and desserts, characterized in that it comprises:
-- a step of weighing the powder ingredients which traditionally constitute ice-cream, Italian soft ice-cream, mousse, dessert, excluding fats;
-- a step of mixing all ingredients in powder form by pulsed and/or continuous pumping a plurality of high-pressure air jets (i.e., under pressures of approximately 25 and 30 bars) ;
-- a step of melting the fat and oil-soluble substances, such as butter and/or margarine and/or vegetable oils and fats, which may also be hardened, soy lecithin, emulsifiers, flavours, antioxidants, by heating;
-- a step of homogenizing the fat substances with other oil-soluble substances;
-- a step of powder fatting by spraying atomized fat phase onto the previously mixed powders, meeting with a cold air stream with a temperature comprised within the range of from approximately -20°C to approximately -30°C, so as to cause the immediate crystallization of extremely fine fat particles around the powder particles;
-- a step of recovering the so obtained semifinished mix in powder form for ice-creams, Italian soft ice-creams, mousses and desserts.

2. Method according to claim 1, characterized in that the ingredients are all the possible ingredients useable under the applicable Law and according to good industrial manufacturing practice (S.B.T.I.).

3. Method according to claim 2, characterized in that soy lecithin and the other oil-soluble ingredients are homogenized in said butter and/or margarine and/or oils and/or (hardened) vegetable fats.

4. Method according to claim 1, characterized in that air used during the blending/fatting steps is suitably filtered air.

5. Method according to claim 4, characterized in that air used in order to obtain the effect of fat substances solidification/crystallization has a temperature comprised within the range of from -20°C to -30°C.

6. Method according to claim 4, characterized in that the air jet pressure during the step of powder ingredients blending is comprised within the range of from 25 to 30 bars.

7. Method according to claim 1 to 6, characterized in that the balancing parameters for the semifinished mix for ice-cream preparation are as follows:
-- total solids level must be not lower than 28% and not higher than 42%, so total water level will be comprised within the range of from 72% to 58%:
| | Minimum level | Maximum level |
|---|---|---|
| Sugars | 16% | 22% |
| Fats | 6% | 12% |
| Non-fat milk solids (NFMS) | 8% | 12% |
| Other solids | 1% | 5% |

8. Semifinished mix obtained according to the method according to one or more of claims 1-7.

9. Ice-creams obtained by blending a minimum amount of 280 g and a maximum amount of 420 g of semifinished mix according to claims 1-8, with 720 g and 580 g, respectively, of water and pasteurizing, ageing and whisking the resulting blend according to good ice-cream manufacturing practice.

10. Method according to claim 1-6, characterized in that the balancing parameters for the semifinished mix for Italian soft ice-cream, mousse or dessert preparation are as follows:
-- the total solids level must be not lower than 45% and not higher than 55%, so total water level will be comprised within the range of from 55% to 45%:

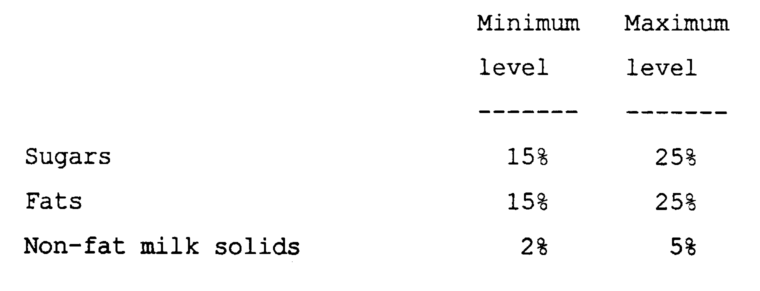

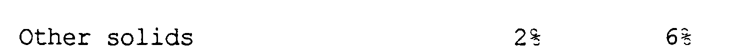

11. Semifinished mix obtained according to the method according to one or more of claims 1-6 and 10.

12. Italian soft ice-creams, mousses, desserts obtained by blending a minimum amount of 450 g and a maximum amount of 550 g of semifinished mix according to claims 1-6 and 10 and 11, with 450 g and 550 g, respectively, of water and pasteurizing and preparing according to good ice-cream manufacturing practice.
